**Europäisches Patentamt**

**European Patent Office**

**Office européen des brevets**

(19)

(11) Veröffentlichungsnummer: **0 010 276**
**B1**

(12) **EUROPÄISCHE PATENTSCHRIFT**

(45) Veröffentlichungstag der Patentschrift:
21.04.82

(51) Int. Cl.³: **B 23 P 1/12,** C 01 B 31/06

(21) Anmeldenummer: 79103949.8

(22) Anmeldetag: 13.10.79

(54) **Verfahren und Vorrichtung zum Bearbeiten eines polykristallinen synthetischen Diamanten und Verwendung des nach diesem Verfahren bearbeiteten Diamanten.**

(30) Priorität: 13.10.78 DE 2844602

(43) Veröffentlichungstag der Anmeldung:
30.04.80 Patentblatt 80/9

(45) Bekanntmachung des Hinweises auf die Patenterteilung:
21.04.82 Patentblatt 82/16

(84) Benannte Vertragsstaaten:
AT BE CH DE FR GB IT LU NL SE

(56) Entgegenhaltungen:
DE-C-856 874
FR-A-1 031 411
FR-A-1 094 969
US-A-2 552 582

(73) Patentinhaber: LACH-SPEZIAL-Werkzeuge GmbH,
Bruchköbeler Landstrasse 39-41, D-6450 Hanau/Main
(DE)

(72) Erfinder: Lach, Horst, Dammstrasse 5,
D-6450 Hanau/Main (DE)

(74) Vertreter: Strasse, Joachim et al, Strasse & Stoffregen,
Patentanwälte Zweibrückenstrasse 15,
D-8000 München 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Vorrichtung zum Bearbeiten eines polykristallinen synthetischen Diamanten und Verwendung des nach diesem Verfahren bearbeiteten Diamanten

Die Erfindung betrifft die Bearbeitung von polykristallinem synthetischem Diamant.

Bei der Hartholzbearbeitung oder bei der Bearbeitung von Kunststoffplatten müssen die Schneiden der verwendeten Fräser je nach Einsatz komplizierte Profile aufweisen, die zum Beispiel aus Kreisringabschnitten verbunden mit Rechtecken oder Ellipsenabschnitten bestehen. Ein solches Profil kann man jedoch nur mit Schneiden erreichen, die vorzugsweise aus Hartmetall oder HSS bestehen. Die Standzeiten von Werkzeugen mit derartigen Schneiden liegen häufig nur bei einigen Stunden.

Einfachere Profile, zum Beispiel Kreisabschnitte, sind auch mit polykristallinem synthetischem Diamant herstellbar. Dazu bedarf es jedoch einer aufwendigen mechanischen Bearbeitung in Form von Schleifen. Entsprechende Profile können auch mit Hilfe bekannter Laser-Techniken erzielt werden, jedoch wird bei einem solchen Trennvorgang die Oberfläche stark zerstört, so daß es einer mechanischen Nachbehandlung bedarf. Um diese nicht zu aufwendig werden zu lassen, müssen daher die Profile einfach aufgebaut sein.

Es besteht nun seit langem das Bedürfnis, bei der Bearbeitung von zum Beispiel Harthölzern oder Kunststoffplatten umlaufende Werkzeuge einzusetzen, die längere Standzeiten im Vergleich zu den Werkzeugen aufweisen, die Hartmetall- oder HSS-Schneiden besitzen. Letztere müssen nämlich häufig während einer Arbeitsschicht ausgewechselt werden, wodurch ein hoher Zeitverlust in Kauf genommen werden muß.

Es ist schon vorgeschlagen worden, polykristallinen synthetischen Diamant formgebend mittels Elektroerosion zu bearbeiten. Hierbei fließt ein Strom bei niedriger Spannung auf einer Bearbeitungsfläche im wesentlichen mit gleicher mittlerer Stromdichte zwischen dem Diamanten und der Elektrode. Es ist Aufgabe dieses Verfahren so abzuwandeln und weiterzuentwikkeln, daß ein Einsatz in ein- oder mehrschneidigen umlaufenden Werkzeugen möglich und ein Werkzeug für das Profilieren von harten Werkstoffen wie Hartholz oder Kunststoffplatten oder Spanplatten herstellbar ist.

Die Aufgabe wird erfindungsgemäß dadurch gelöst, daß zur Herstellung beliebiger Profile das Bearbeiten des polykristallinen synthetischen Diamanten durch Funkenerosion erfolgt. Durch den Funkenüberschlag wird eine bessere und saubere Formgebung des Profils erzielt.

Zwar ist es bekannt, Naturdiamanten elektroerosiv zu bearbeiten, um zum Beispiel in diese Bohrungen (Ziehkonen) zum Ziehen von Drähten auszubilden. Jedoch konnte diese Kenntnis keine Anregung zu der vorliegenden Erfindung bieten. Bei der elektroerosiven Bearbeitung von Naturdiamant muß nämlich der Körper, der nicht leitend ist, mit einer Graphitschicht ummantelt werden, um eine leitende Oberfläche zu erhalten (US-PS 2 552 582, US-PS 2 939 941, DE-PS 856 874, FR-PS 1 031 411 und FR-PS 1 094 969). Außerdem wird bei dem Funkenüberschlag zwischen der Werkzeugelektrode und Werkstoffdiamanten eine Zerstörung der Oberfläche durch Kraterbildung herbeigeführt, so daß eine anschließende Nachbehandlung zur Erzielung einer einwandfreien Oberfläche erforderlich ist. Nach einem anderen Vorschlag wird der Naturdiamant in eine wäßrige Elektrolytlösung in solubilisiertem Zustand gelegt, um zwischen zwei Elektroden, zwischen denen der Diamant positioniert wird, einen Funkenüberschlag herbeizuführen (DE-OS 2 404 857). Der Durchschnittsfachmann mußte demzufolge stets davon ausgehen, daß es einer besonderen Behandlung des Diamanten bedarf, um eine elektroerosive Bearbeitung herbeizuführen. Außerdem erfolgt nach dem Stand der Technik kein Hinweis, daß man in Naturdiamanten — neben Löchern — besondere Profile durch eine elektroerosive Bearbeitung herstellen kann.

Trotz dieser bekannten Nachteile läßt sich die Technik der erosiven Bearbeitung auch auf dem vorliegenden Gebiet nutzen. Hierbei wird die Erkenntnis verwandt, daß das Raumnetz der verwandten polykristallinen synthetischen Diamanten einen metallischen Anteil von etwa 2% als Katalysator aufweisen. Dieser Katalysator besteht vorzugsweise aus Kobalt, kann aber auch Wolfram-, Aluminium-, Kupfer-, Eisen-, Molybdän-, Nickel- oder Zirkoniumanteile aufweisen. Der Katalysator kann als Werkstoffelektrode gegenüber der Werkzeugelektrode benutzt werden. Es bedarf demzufolge keiner besonderen Behandlung des polykristallinen synthetische Diamanten. Insbesondere bedarf es keiner Umwandlung der Oberfläche des Diamanten in Graphit. Kommt es hierbei gemäß der Erfindung sogar zu einem Funkenüberschlag zwischen der Werkstoffelektrode und der Werkzeugelektrode wird der Katalysator angegriffen und »herausgewaschen«. Gleichzeitig werden dadurch die von dem Katalysator umgebenen polykristallinen Partikel gelöst. Da die Partikel überaus geringe Dimensionen aufweisen und fein verteilt sind, wird beim Herauswaschen des Katalysators eine überaus einwandfreie Oberfläche erreicht, die einer mechanischen Nachbehandlung nicht bedarf.

Die EP-A-0 006 827, welches Dokument unter Artikel 54.3 fällt, zeigt, daß synthetische polykristalline Diamanten im allgemeinen Sinterkörper mit einem metallischen und somit elektrisch leitenden Bindematerial sind, bei denen eine Bearbeitung durch Elektroerosion, wobei an sich nur das Bindematerial abgebaut wird, möglich ist.

Mit Hilfe der erfindungsgemäßen funkenerosiven Bearbeitung können Profile beliebiger Form erzielt werden, die eine absolut schneidende Kantenschärfe aufweisen.

Um sicherzugehen, daß die Oberfläche nicht durch zu hohe Erwärmung beschädigt wird, befinden sich die Elektroden in einem Kühlfluid in Form einer dielektrischen Flüssigkeit. Diese wird in dem die Elektroden aufnehmenden Behältnis fortwährend ausgetauscht, um die abgetrennten Materialien wegspülen zu können, so daß ungewünschte Funkenüberschläge vermieden werden.

Bei der Vorrichtung zur Durchführung des erfindungsgemäßen Verfahrens wird die Werkzeugelektrode senkrecht oberhalb des polykristallinen synthetischen Diamanten angeordnet (die einander zugewandten Flächen verlaufen parallel). Der synthetische Diamant ist vorzugsweise auf einem Hartmetall als Trägermaterials aufgebracht. Die Werkstoffelektrode selbst weist die Negativform zu dem Profil auf, welches in dem polykristallinen synthetischen Diamant hergestellt werden soll. Das Grundmaterial des polykristallinen synthetischen Diamanten besteht aus Platten, die zum Beispiel Dicken von 1,5 oder 3,2 mm aufweisen und kreisförmig mit einem Durchmesser von 13,7 mm sind. Sollen Profile hergestellt werden, die aus einer einzigen Platte nicht gewonnen werden können, so können mehrere solcher Platten aneinandergrenzend auf einem Trägermaterial aufgebracht werden. Auch können anstelle der Platten mit kreisförmiger Oberfläche Stäbchen aus polykristallinem synthetischem Diamant Verwendung finden.

Die mit Hilfe des erfindungsgemäßen Verfahrens hergestellten profilierten polykristallinen synthetischen Diamanten können nun als Schneiden in zum Beispiel Fräsen für die Hartholz- oder Kunststoffplatten- oder Spanplattenbearbeitung eingesetzt werden. Es hat sich herausgestellt, daß die Standzeiten entsprechender Fräsen mehrere Wochen betragen, wohingegen im Vergleich von nach den bekannten Techniken bearbeiteten Werkzeugschneiden aus Hartmetall oder HSS eine Standzeit von einigen Stunden nur erreicht werden kann.

Bei der Herstellung bestimmter Profile in polykristallinen synthetischen Diamanten mit Hilfe der funkenerosiven Bearbeitung sind keine Grenzen gesetzt, da die Bearbeitung metallischer Werkzeugelektroden als Formvorgabe für das Profil des synthetischen Diamanten keine Schwierigkeiten bereitet.

Weitere Einzelheiten, Vorteile und Merkmale der Erfindung ergeben sich aus der nachfolgenden Beschreibung der Zeichnung.

Es zeigen

Fig. 1 eine Prinzipdarstellung einer Vorrichtung zur Durchführung des erfindungsgemäßen Verfahrens,

Fig. 2 und Fig. 3 Profile von polykristallinem synthetischem Diamant, die mit Hilfe des erfindungsgemäßen Verfahrens hergestellt worden sind.

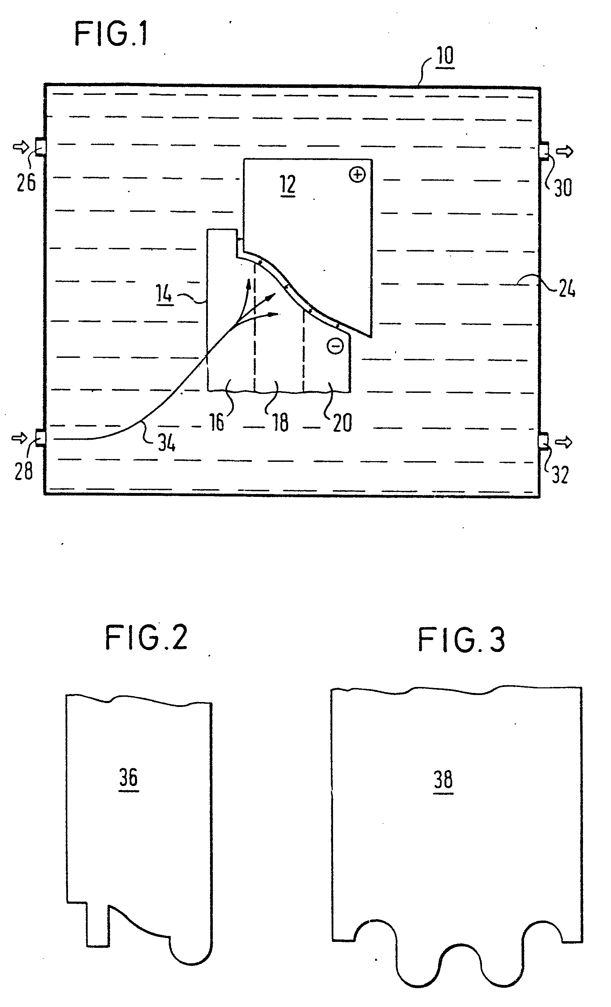

In Fig. 1 sind schematisch und in Draufsicht die wesentlichen Teile einer Vorrichtung dargestellt, die bei der Durchführung des erfindungsgemäßen Verfahrens Verwendung finden. In einem Behältnis 10 befindet sich eine Werkstückelektrode 12 und Werkstoffelektrode 14. Die Werkstoffelektrode 14 und die Werkstückelektrode 12 sind übereinander angeordnet. Der Werkstoff besteht aus polykristallinem synthetischem Diamant, der vorzugsweise auf einem Träger in Form von Hartmetall aufgebracht worden ist. Wie man der Darstellung der Werkstoffelektrode 14 entnehmen kann, besteht diese im Ausführungsbeispiel aus Abschnitten 16, 18 und 20. Eine Zusammensetzung von mehreren Abschnitten zur Erreichung einer gewünschten Fläche der Werkstoffelektrode 14 ist dann erforderlich, wenn die zur Verfügung gestellten Rohlinge in Form von Platten nicht die gewünschten Dimensionen aufweisen. Handelsüblich werden nämlich Platten kreisförmigen Querschnitts mit einem Durchmesser von zum Beispiel 13,7 mm angeboten, deren Dicke zum Beispiel 1,5 oder 3,2 mm beträgt.

Die Elektroden 12 und 14 befinden sich in einem mit dem Bezugszeichen 24 versehenen Kühlfluid in Form einer dielektrischen Flüssigkeit. Die Flüssigkeit 24 kann über Öffnungen 26 und 28 in das Behältnis 10 eingelassen werden, um über Öffnungen 30 und 32 an gegenüberliegenden Bereichen des Behältnisses 10 abgelassen zu werden. Mit dem Pfeil 34 ist eine gezielte Strömungsrichtung des Fluids in Richtung des Bereichs zwischen den Elektroden 12 und 14 angedeutet.

Die Werkzeugelektrode 12 ist als positive Elektrode und die Werkstoffelektrode 14 als negative Elektrode ausgebildet. Zwischen diesen beiden Elektroden wird mit einer nicht dargestellten Spannungsquelle eine Potentialdifferenz erzeugt, die so groß ist, daß ein Funkenüberschlag zwischen der Werkzeugelektrode 12 und Werkstoffelektrode 14 erfolgt. Durch die erfindungsgemäße Anordnung der Werkzeugelektrode 12 oberhalb der Werkstoffelektrode 14 erfolgt ein unmittelbarer Funkenüberschlag von den Randflächen der Werkzeugelektrode 12 auf die unmittelbar darunterliegenden Bereiche der Werkstoffelektrode 14. Um nun in dem Werkstoff 14 ein gewünschtes Profil zu erzeugen, muß die Werkzeugelektrode die entsprechende Negativform aufweisen. Mit anderen Worten bestimmt die Form der Werkzeugelektrode 12 das Profil des polykristallinen synthetischen Diamanten. Da ohne Schwierigkeiten die leitenden Werkzeugelektrode 12 bearbeitet und gewünschte Umfangsflächen erhalten kann, wird auf diesem Wege erreicht, daß auch der polykristalline synthetische Diamant beliebige Profile aufweisen kann.

In Fig. 2 und Fig. 3 sind beispielhaft Profile von polykristallinen synthetischen Diamanten dargestellt, die mit Hilfe des elektroerosiven Bearbeitens hergestellt worden sind. Das Profil 36 der Fig. 2 setzt sich aus Kreisabschnitten und Rechtecken zusammen, wohingegen das Profil 38 der Fig. 3 vorwiegend aus Kreisabschnitten zusammengesetzt ist, die in den Randbereichen des polykristallinen Materials in Geraden übergehen. Die Kreisabschnitte weisen dabei jeweils den gleichen Radius auf, sind jedoch zum Teil gegeneinander hinsichtlich ihres Mittelpunktes versetzt.

Die mit Hilfe des erfindungsgemäßen Verfahrens profilierten polykristallinen synthetischen Diamanten können nun auf den Brustflächen der Schneidkanten von ein- oder mehrschneidigen umlaufenden Werkzeugen befestigt werden. Die Befestigung kann dadurch erfolgen, daß das Trägermaterial, welches vorzugsweise Hartmetall ist, auf die Brustflächen angelötet wird.

**Patentansprüche:**

1. Verfahren zum elektroerosiven Bearbeiten von polykristallinem synthetischem Diamant, dadurch gekennzeichnet, daß zur Herstellung beliebiger Profile die Bearbeitung durch Funkenerosion erfolgt.

2. Polykristalliner synthetischer Diamant, hergestellt nach Anspruch 1, dadurch gekennzeichnet, daß der funkenerosiv bearbeitete polykristalline synthetische Diamant ein Profil einer Kreisscheibe oder eines Kreisausschnittes oder eines Kreisringes oder eines Kreisringausschnittes oder eines Rechtecks oder eines Ellipsenabschnittes oder einer aus diesen Konfigurationen zusammengesetzten Form aufweist.

3. Verwendung von durch Funkenerosion bearbeiteten polykristallinen synthetischen Diamanten als Schneiden in ein- oder mehrschneidigen umlaufenden Werkzeugen, vorzugsweise zur Bearbeitung von Hartholz oder Kunststoffplatten oder Spanplatten.

4. Vorrichtung zur Durchführung des Verfahrens nach Anspruch 1, dadurch gekennzeichnet, daß in einem Kühlfluid (24) die Werkzeugelektrode (12) als Kathode und die Werkstoffelektrode (14) als Anode übereinander angeordnet sind, wobei die Werkstoffelektrode in dem der Werkzeugelektrode zugewandten Bereich aus polykristallinem synthetischem Diamant besteht und vorzugsweise auf Hartmetall als Träger aufgebracht ist.

5. Vorrichtung nach Anspruch 4, dadurch gekennzeichnet, daß die Werkzeugelektrode (12) die Negativform des in dem polykristallinen synthetischen Diamant herzustellenden Profils aufweist.

**Claims**

1. Method for electroerosive machining synthetic polycrystalline diamond, characterized in that for producing arbitrary profiles the machining is made by means of spark erosion.

2. Polycristalline synthetic diamond produced according to claim 1, characterized in that the synthetic polycristalline diamond machined by spark erosion shows the profile of a circular disc or a circle section or a circular ring or a circular ring section or a rectangle or an ellipsis section or of a form composed of these configurations.

3. Use of synthetic polycristalline diamonds machined by spark erosion as cutting edges in single- or multiple-cut rotary tools, preferrably for machining of hardwood or synthetic resin sheets or plates of particle wood.

4. Means for performing the method according to claim 1, characterized in that in a cooling fluid (24) the tool electrode (12) as the cathode and the material electrode (14) as the anode are arranged one above the other, said material electrode, in its section arranged towards the tool, consists of synthetic polycristalline diamond and is preferrably being put on hard metal as a carrier.

5. Means according to claim 4, characterized in that the tool electrode (12) shows the negative form of the profile to be made in the synthetic polycristalline diamond.

**Revendications**

1. Procédé pour l'usinage de diamant synthétique polycristallin par électroérosion, characterisé en ce que la réalisation des quelconques profils résulte par le traitement de décharge par étincelle.

2. Diamant synthétique polycristallin fabriqué suivant la revendication 1, characterisé en ce que le diamant synthétique polycristallin usiné par décharge par étincelle montre un profil d'un cercle ou d'une section d'un cercle ou d'une rectangle ou d'une section d'une ellipse ou d'une forme composé de ces configurations.

3. Emploi des diamants synthétiques polycristallines usinés par décharge par étincelle comme des tranchants en outils circulants d'un ou quelques tranchants, de préférence pour l'usinage de bois dur ou du plateaux de la matière plastique ou des plaques de copeaux.

4. Dispositif pour l'exécution du procédé suivant revendication 1, characterisé en ce que dans un fluide de refroidissement l'éléctrode d'outil (12) comme la cathode et l'éléctrode de la matière (14) comme d'anode sont disposés l'un sur l'autre, l'éléctrode de la matière en secteur tourné vers l'éléctrode d'outil être composé du diamant synthétique polycristallin et est préférablement mis sur metal dur comme un support.

5. Dispositiv suivant revendication 4, characterisé en ce que l'éléctrode d'outil (12) a la forme negative du profil à produire dans le diamant syntétique polycristallin.

## FIG.1

## FIG.2

## FIG.3